# EUROPEAN PATENT APPLICATION

(11) **EP 1 199 263 A2**
(43) Date of publication of application: **24.04.2002**
(21) Application number: 01124682.4
(22) Date of filing: 16.10.2001
(51) Int. Cl.: B65G 47/244

(54) **Load lifting and centering device for a load on a conveying line**

(30) Priority: 16.10.2000 IT MI002234
(71) Applicant: OFFICINA MECCANICA SESTESE S.p.A., 28040 Paruzzaro (Novara) (IT)
(72) Inventor: Tacchini, Franco, 28010 Nebbiuno, (Novara) (IT)
(74) Representative: Faggioni, Carlo Maria, Dr. Ing.

(57) **Abstract**

It is disclosed a load lifting and centering device for conveyors, comprising
at least two lateral elements (11a,c) for supporting the load, movable horizontally and adapted to come close to each other by way of an actuator means (10);
abutting means (12), at the upper end of said support elements (11) for abutting against a respective lateral edge of the load; a center element (11b) coupled with said two lateral support elements (11a,c) in such a way as to be kept equally spaced between them in any position taken up by such elements;
lifting means (1a,4,5,6) for lifting said lateral support elements jointly with said centering element; and
guide means (P,P2,P3) for causing said center element (11b) to converge towards the central longitudinal axis of the device while it is being lifted by said lifting means.

## Description

The present invention concerns a lifting and centering device for loads travelling on conveyors.

As known, on conveyors the requirement often arises to center the load as far as possible on a preset longitudinal axis, normally the central axis of the conveyor. For example, in those cases in which the conveyor is meant to carry a load towards a packaging or conditioning station, or the like, it is necessary for the load to arrive in correspondence of said working station aligned according to a desired axis, so as not to determine any malfunctions or mechanical interferences between the load and the operating members. Besides, it is very rare for a load to be placed on the conveyor already in the correct position, unless one makes use of costly automatic handling equipment; whereas, in most cases, the load is placed on the conveyor by hand, or with the help of a "forklift truck" or a "transpallet", whereby its positioning is fairly approximate.

Due to its weight, the load could be shifted across the conveyor, by being caused to slide thereon, only with the help of pushers of considerable dimensions, operated by costly idraulic plants units.

The requirement thus exists to provide a device for centering the load on the conveyor, which is adaptable and economic - that is, which can be applied on any conveyor, by being eventually introduced as an additional unit, without requiring any sophisticated robotized systems - and which involves a simple, solid and universal structure, such as to allow its use with any type of load, whether it be light or heavy.

At the same time, on conveyors leading to a packaging station - for example a wrapping apparatus - the requirement arises to lift the load from the travelling plane, so as to be able to set the packaging film also onto a lower portion of the load, without interfering with the conveyor. In such cases, it is necessary to adopt a lifting system which leaves uncovered the lower edge of the load: this implies that the system should be apt to adjust itself according to the plan dimensions of the load, which turns out to be very critical in those cases in which the lifting system has to "work" on narrow bearing surfaces, as in the case of the pallet transoms.

The object of the present invention is thus to provide a load lifting and centering device which satisfies the aforementioned requirements, particularly for what concerns the problems connected with the loads supported on pallets.

According to the present invention, said objects are reached by means of a single device, as described in its essential and inventive features in the accompanying claims.

Further characteristics and advantages of the device according to the present invention will anyhow be more evident from the following detailed description of a preferred embodiment thereof, given by way of example and illustrated on the accompanying drawings, in which:
Fig. 1 is a top plan view, with some parts removed, of the device according to the invention;
Fig. 2 is a section view, taken along the line II-II of fig. 1, of the device in a condition of rest;
Fig. 3 is a view similar to that of fig. 2, in an initial load centering step;
Fig. 4 is a view similar to that of fig. 2, in an intermediate load lifting step;
Fig. 5 is a longitudinal section view of the device according to the invention, applied to a roller conveyor; and
Fig. 6 is an enlarged view of the portion indicated by A in fig. 5.

The device according to the present invention is held into a housing or containment framework 1, positioned beneath a section of a conveyor line - for example a roller conveyor R - having discontinuities in the direction moving lengthwise. Into the framework 1 there is positioned a vertically translatable frame 2, onto which there are mounted horizontally translatable support beams 3a, 3b, 3c.

The vertically translatable frame 2 is mounted and guided on the containment framework 1 by means of slideguides 2a. Furthermore, the frame 2 comprises drawing bushes 1a which are joined, through suitable bearings, eccentric on four driving wheels 4a, 4b, 4c and 4d. The rotation of the wheels 4e to 4d is apt to cause the translation of the bushes 1a according to a vertical component, which lifts and lowers the frame 2 to which they are connected.

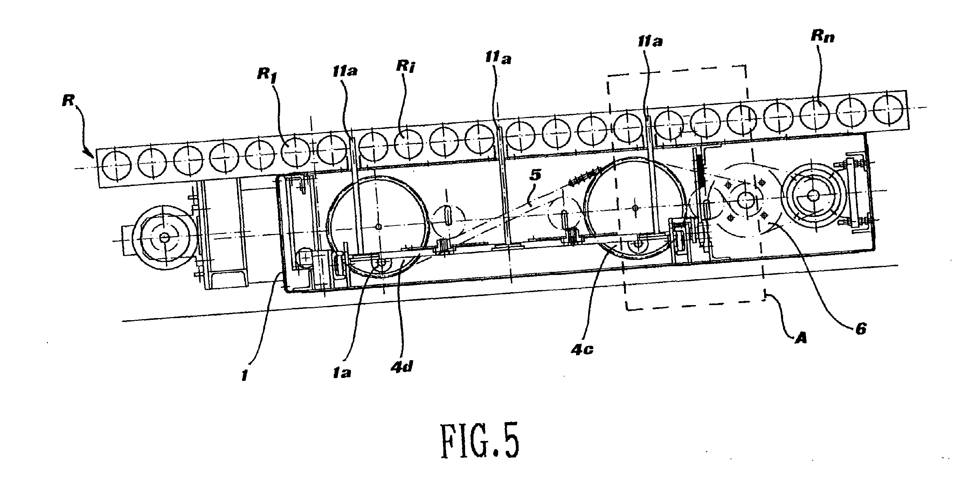

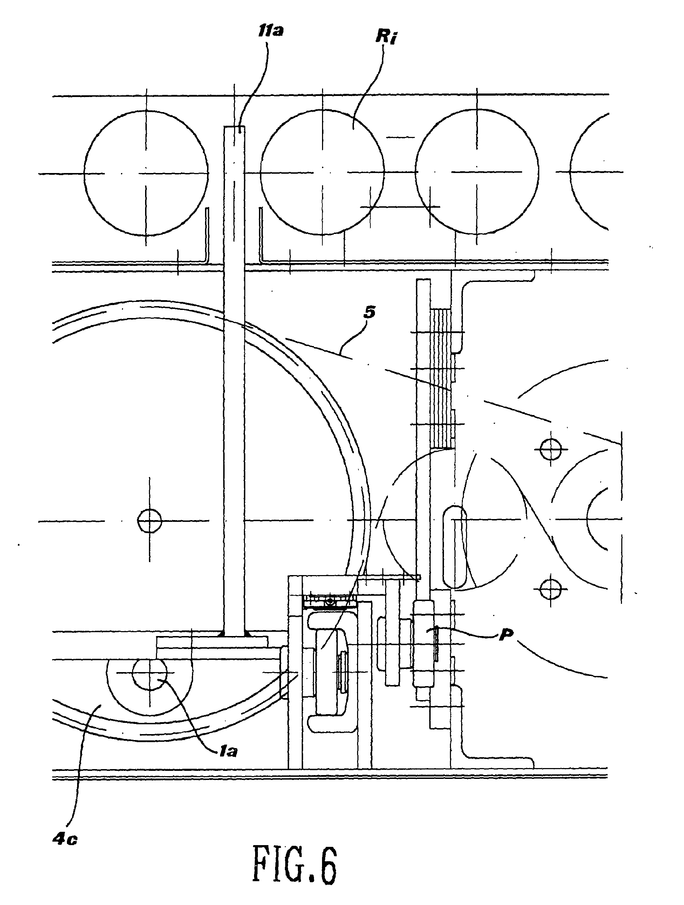

Preferably (figs. 5 and 6), the driving wheels are gearwheels coupled by twos, on the same side of the device, by means of a drawing chain 5 controlled by a motor 6. The alternate movement of the chain 5, according to a preset timing, causes the wheels to perform a rotation of about ± 180°, in correspondence of which the frame 2 performs a full lifting and lowering cycle.

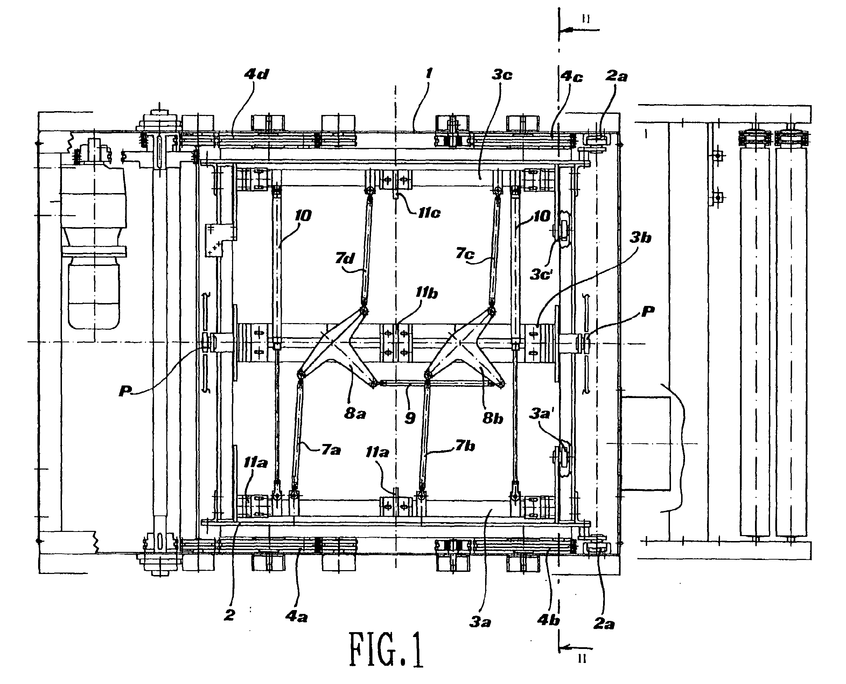

The three beams 3a to 3c are positioned parallel to the longitudinal axis of the conveyor and are slidable, by way of suitable roller bearings (indicated by 3a' and 3c' in fig. 1), on transversal guides of the frame 2.

The three beams 3a to 3c are connected together by two pairs of rods 7a-7b and 7c-7d hinged, on one side, onto one of the lateral beams, 3a and 3c respectively, and on the other side, to connecting T-square plates, 8a and 8b respectively, rotatable about a vertical axis integral with the central beam 3b.

Preferably, the T-square plates 8a and 8b also comprise a third hingeing point for a mutual connection rod 9, apt to ensure a synchronous movement between them, also in the presence of inevitable slacks and/or strains.

Two actuating cylinders 10, such as pneumatic or hydraulic jacks, connect together the two lateral beams 3a and 3c. The operation of said actuators 10 controls the mutual approach of the beams 3a and 3c, causing them to slide on the respective guides of the frame 2.

With this arrangement, the three beams 3a to 3c are connected together so that a respective approach between the two lateral beams 3a and 3c may always take place symmetrically about the central beam 3b; this allows to obtain the desired operation, as explained hereinafter.

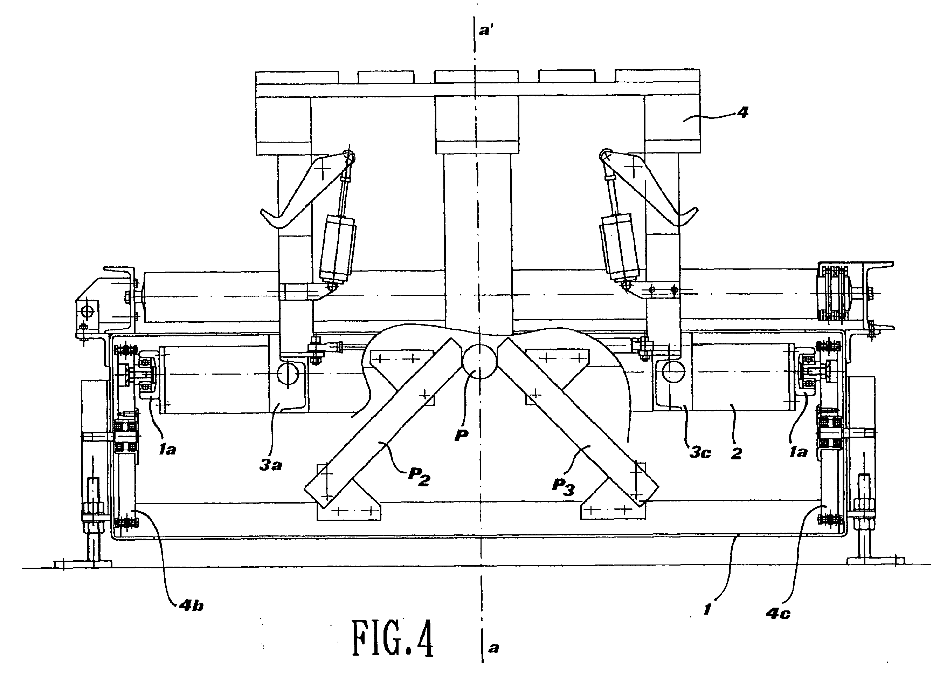

Centering pins P, preferably comprising a sliding wheel, are provided at the end of the central beam 3b projecting lengthwise therefrom. Said pins P are apt to be guided in their vertical movement, while the frame 2 is being lifted thanks to the rotation of the wheels 4a to 4d, by guide rails P2 and P3 fixed to the framework 1 and mounted converging towards the central longitudinal axis of the device (as shown in fig. 4).

Each of the three beams 3a to 3c comprises moreover three support uprights 11a, 11b, 11c, vertically projecting in the manner of a comb, and having a section and pitch such as to allow them to be inserted in the gap left between two adjacent rollers of the overlying roller conveyor R.

According to a preferred embodiment of the invention, delimiting feelers 12a and 12c are provided on at least two opposite support uprights 11a and 11c, for instance at least on the four uprights at the corners of the device.

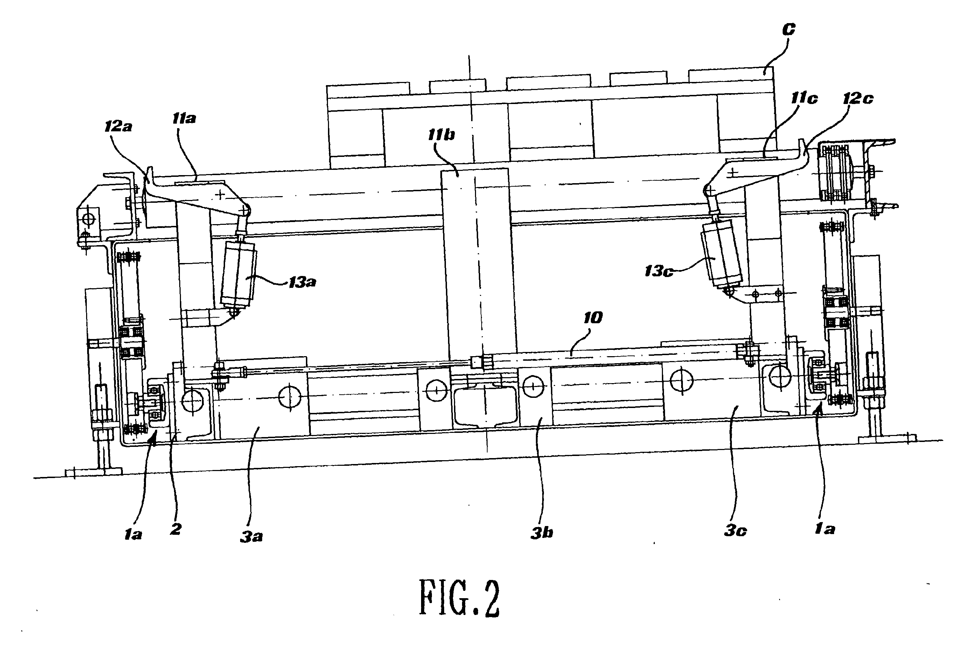

With the device in a condition of rest (fig. 2), namely with the frame 2 in its lowest position, the upper end of the support uprights 11a to 11c lies at a height which is slightly below the load travelling plane on the roller conveyor R. In such conditions, the feelers 12a and 12c instead project to a certain extent above said travelling plane.

Preferably, the feelers are mounted oscillating at the end of the support uprights and are controlled by suitable actuators 13a and 13c.

The working of the device will now be described with reference to the single components thereof, illustrated heretofore, so as to make it perfectly comprehensible.

In the condition of rest shown in fig. 2, a load to be centered - such as a pallet C - is moved forward on the roller conveyor R up to reaching the device according to the invention. Let us suppose that the pallet C is arranged in an offset position, in respect of the central longitudinal axis of the conveyor and, to some extent, also in an oblique position (that is, with its lateral sides not perfectly aligned according to the travelling direction).

At this point, the jacks 10 are operated thereby causing the two lateral beams 3a and 3c, with the respective support uprights 11a and 11c, to approach the central axis. As soon as one of the feelers - for example the feeler 12c - engages the pallet C, the corresponding upright substantially stops and the relative motion of approach between the uprights is obtained by mere displacement of the central upright and of the other lateral upright 11a.

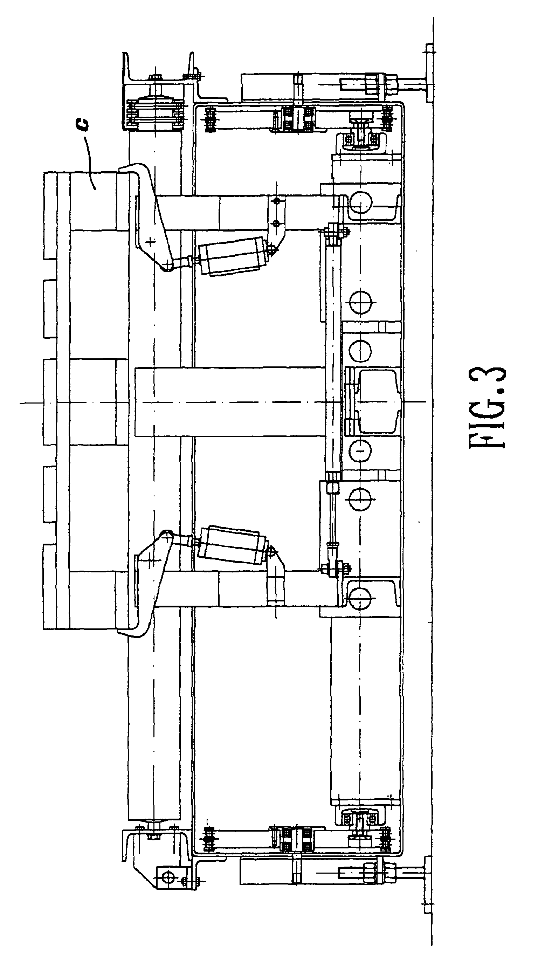

The end of this first step - in which the pallet C is engaged - corresponds to the situation illustrated in fig. 3, in which the two lateral uprights are positioned under the lateral transoms of the pallet C and the central upright is perfectly aligned along the central axis of the load C. In the event that at least four feelers, are provided at the corners of a quadrilateral, they are also apt to guarantee - by acting on the load with a certain pressure (determined by using sufficiently powerful jacks 10) - a straightening of said load along the travelling direction.

The relative positioning between the feelers and the ends of the respective uprights 11a-11c (as can be seen in fig. 3, the end of the feeler is spaced horizontalwise outwardly in respect of the edge of the upright) always allows to ensure that the pallet is then supported on said uprights leaving uncovered at least part of the lower edge of its lateral transoms, thereby achieving one of the objects of the present invention.

In the actual centering step, the frame 2 is lifted by way of the driving wheels 4a to 4d. During lifting, the upper ends of the uprights insert themselves into the gaps formed between two adjacent rollers of the roller conveyor R, projecting outwardly therefrom and thereby lifting the load C as shown in fig. 4.

While the frame 2 is being lifted, the centering pins or device P come in contact with the guides P2 and P3 and are thus caused to perform also a horizontal motion of translation - together with the respective central beam which, thanks to the action of the jacks 10, forms a single unit with the lateral beams, and the respective support uprights - converging in the direction of the central longitudinal axis a-a' of the device. One thereby obtains the simultaneous lifting and centering of the load on the conveyor.

The feelers 12a and 12c are disengaged from the load by oscillation caused by the actuators 13a and 13c (fig. 4).

In this condition the pallet C, with the respective overlying load, is in a perfect position to carry out at best a subsequent operation thereon, for example a packaging operation.

Subsequently the driving wheels, controlled by the motor 6, perform a reverse rotation which causes the lowering of the frame 2 with the respective support uprights, until the pallet is positioned back onto the rollers of the roller conveyor R.

Thus, through a simple and economic structure, the invention allows to obtain the centering, straightening and lifting of the load on the conveyor, apart from the dimensions in width and height of said load.

The device according to the present invention can be applied to any pre-existing roller conveyor, or else it can be conceived as an independent module (for instance, equipped with its own rollers) to be inserted between two adjacent sections of a different transport line, such as a conveyor belt. Or still, it can be positioned astride of a conveyor belt, the lateral support uprights projecting from the travelling plane at the sides of a belt, sufficiently narrow as not to interfere with the lateral movement of said uprights.

Preferably, the rollers R₁, Rᵢ ... Rₙ are motor-driven, so as to synchronize the movement of the load, along the roller conveyor R, with the lifting and centering steps of the device according to the present invention. Nonetheless, it is also possible for said rollers to be idle and for the load to be shifted by hand, or by other handling devices positioned above the conveyor.

It is anyhow understood that the invention is not limited to the particular embodiment described heretofore, which merely represents a non-limiting example of its scope, but that different variants can be introduced, all within reach of a technician skilled in the art, without thereby departing from the scope of the present invention.

For example, the jacks 10 can equally operate between a lateral beam and the central beam, instead of operating between the two lateral beams.

Moreover, the number of the support uprights could also differ from nine, and it could for example be higher, so as to allow lifting and centering also loads of more reduced dimensions as compared to a standard pallet.

Finally, the containment framework has been illustrated as an independent framework, but it could also consist of a fixed base lying under the conveyor.

## Claims

1. Load lifting and centering device for conveyors, comprising
- at least two lateral elements to support the load, movable horizontalwise and come close each other by way of first actuator means;
- feeler means, at the upper end of said support elements, apt to abut against a respective lateral edge of the load;
- a centering element, coupled with said two lateral support elements in such a way as to keep equally spaced between them in any position taken up by such elements;
- lifting means, apt to lift said lateral support elements jointly with said centering element; and
- first guide means, apt to cause said centering element to converge towards the central longitudinal axis of the device while it is being lifted by said lifting means.

2. Device as in claim 1), further comprising a middle element, movable horizontalwise and integral with said centering element.

3. Device as in claim 2), wherein at least one T-square plate is rotatably hinged onto said middle element, control rods being connected, on one side, to said T-square plate and, on the other side, to the two lateral support elements, so as to determine a mutual symmetrical displacement of said two lateral elements in respect of the middle element.

4. Device as in claim 3), wherein said support elements each consist of a beam, movable transversally to the longitudinal axis of the conveyor and carrying, vertically projecting in the manner of a comb, support uprights provided with said feeler means.

5. Device as in claim 4), wherein said support element beams are slidable on second guides provided on a frame apt to translate verticalwise by way of said lifting means.

6. Device as in claim 5), wherein said lifting means consist of wheels comprising an eccentric pin, rotatably connected to said vertically translatable frame, the synchronized rotation of said wheels being obtained through a chain connection.

7. Device as in any one of the previous claims, wherein said first actuator means consist of jacks acting, on one side, on a lateral support element and, on the other side, on the opposite lateral support element.

8. Device as in any one of the previous claims, wherein said centering element is in the form of a pin, and said first guide means define two planes, intersecting as a dihedral edge parallel to the longitudinal axis of the conveyor, and converging upwards in correspondence of the central longitudinal axis of the conveyor, against which said pin is apt to slide while said support elements are being lifted.
